# FASCICULE DE BREVET EUROPEEN

(11) **EP 2 480 786 B1**
(45) Date de publication et mention de la délivrance du brevet: **09.11.2016**
(21) Numéro de dépôt: 10769014.1
(22) Date de dépôt: 22.09.2010
(51) Int. Cl.: F03B 13/18

(54) **DISPOSITIF POUR CONVERTIR L'ÉNERGIE DES VAGUES EN ÉNERGIE ÉLECTRIQUE**
VORRICHTUNG ZUR UMWANDLUNG VON ENERGIE AUS WELLEN IN ELEKTRISCHE ENERGIE
DEVICE FOR CONVERTING THE ENERGY OF WAVES INTO ELECTRIC ENERGY

(30) Priorité: 22.09.2009 FR 0956499
(43) Date de publication de la demande: 01.08.2012
(73) Titulaire: Compagnie Engrenages et Reducteurs-Messian-Durand, 59400 Cambrai (FR); D2M Consultants, 83500 La Seyne Sur Mer (FR)
(72) Inventeur: THOMAS, Pierre Armand, F-92800 Puteaux (FR); LESSARD, Fabrice, F-59400 Cambrai (FR)
(74) Mandataire: Lavoix
(86) Numéro de dépôt international: PCT/FR2010/051978
(87) Numéro de publication internationale: WO 2011/036401

(56) Documents cités:
- WO-A1-2008/109062
- GB-A- 1 515 744
- NL-C1- 1 016 103
- US-A- 4 206 601
- US-A- 4 539 485
- US-A1- 2007 257 491

## Description

La présente invention concerne un dispositif de conversion de l'énergie mécanique de la houle d'une étendue d'eau, telle qu'une mer, en énergie électrique.

Il est connu d'utiliser l'énergie mécanique d'une étendue d'eau pour la convertir en énergie électrique. A cet effet, on connaît déjà des dispositifs de conversion de l'énergie cinétique du courant hydraulique en énergie électrique, équipant par exemple une centrale hydraulique, et des dispositifs de conversion de l'énergie potentielle de la houle ou des vagues en énergie électrique.

On rappelle que l'énergie de la houle, ou des vagues, est créée par le frottement des vents sur la surface de l'étendue d'eau. Cette énergie de la houle est une énergie potentielle, provenant d'une différence de hauteur entre les creux et les bosses des ondulations de la surface de l'étendue d'eau.

On a déjà proposé dans l'état de la technique des dispositifs de conversion de l'énergie mécanique de la houle d'une étendue d'eau, telle qu'une mer, en énergie électrique. Un tel dispositif comporte habituellement un organe sensiblement fixe et un organe mobile par rapport à l'organe fixe, destiné à être entraîné en mouvement par la houle.

Un tel dispositif est généralement encombrant et/ou difficile à mettre en oeuvre.

L'invention a notamment pour but de fournir un dispositif de conversion de l'énergie mécanique de la houle en énergie électrique qui soit simple à mettre en oeuvre, tout en étant suffisamment stable et ayant une efficacité optimale.

A cet effet, l'invention a notamment pour objet un dispositif de conversion de l'énergie mécanique de la houle d'une étendue d'eau, telle qu'une mer, en énergie électrique selon la revendication 1.

Dans la présente description, on qualifie de verticale une direction parallèle à la direction de la pesanteur.

Le dispositif selon l'invention est simple à mettre en oeuvre, puisque l'énergie mécanique reçue par ce dispositif correspond directement aux mouvements verticaux de l'organe mobile, en particulier de l'élément flottant entraîné par la houle. L'organe mobile étant déplacé verticalement, c'est son énergie potentielle de pesanteur qui est convertie en énergie électrique, par les moyens de génération d'énergie électrique.

On notera que les moyens de stabilisation de l'organe fixe permettent de garder les moyens de guidage dans une direction sensiblement verticale, de façon à optimiser l'énergie potentielle de pesanteur de l'organe mobile.

Un dispositif de conversion d'énergie selon l'invention comporte de préférence l'une ou plusieurs des caractéristiques suivantes, prises seules ou en combinaison.
- Les moyens de génération d'énergie comportent un générateur d'énergie électrique, comprenant un stator porté par l'organe fixe, et un rotor portant un pignon, au moins une crémaillère, portée par l'organe mobile sensiblement verticalement, destinée à coopérer avec le pignon pour actionner le rotor en rotation lorsque l'organe mobile se déplace verticalement par rapport à l'organe fixe.
- Le pignon est relié au rotor par un mécanisme de roue libre portant un volant d'inertie.
- Le dispositif comprend un système d'entraînement du rotor par le pignon, comportant : au moins un arbre d'entrée relié au pignon, un arbre de sortie, relié au rotor, des premiers moyens d'engrenage, comportant une première roue dentée solidaire de l'arbre de sortie, et une première roue libre dentée agencée sur l'arbre d'entrée, et un pignon intermédiaire engrenant avec la première roue libre dentée et la première roue dentée, la première roue libre dentée étant adaptée pour entraîner le pignon intermédiaire en rotation lorsque l'arbre d'entrée est entraîné dans un premier sens de rotation, et pour tourner librement lorsque l'arbre d'entrée est entraîné dans un second sens de rotation opposé au premier, et des seconds moyens d'engrenage, comportant une seconde roue dentée, solidaire de l'arbre de sortie, et une seconde roue libre dentée, agencées sur l'arbre d'entrée, et engrenant avec la seconde roue dentée, la seconde roue libre dentée étant adaptée pour entraîner la seconde roue dentée lorsque l'arbre d'entrée est entraîné dans le second sens de rotation, et pour tourner librement lorsque l'arbre d'entrée est entraîné dans le premier sens de rotation.

- L'organe mobile comporte un élément tubulaire creux, à l'intérieur duquel est logé le mât, l'élément tubulaire creux étant délimitée par une paroi interne portant la crémaillère.
- Le mât est creux, et comporte un passage pour un câble électrique de sortie du générateur d'énergie électrique.
- Les moyens de stabilisation comportent des moyens d'ancrage au fond de l'étendue d'eau.
- Les moyens d'ancrage comprennent au moins une ligne d'ancrage fixée à une extrémité supérieure du mât, et s'étendant le long du mât jusqu'à une extrémité inférieure du mât.
- Les organes fixe et mobile comprennent des butées complémentaires de fin de course limitant le déplacement vertical relatif de ces organes fixe et mobile entre des positions déployée et rétractée.
- Le dispositif de conversion d'énergie comporte des moyens motorisés destinés à actionner le pignon de façon à déplacer l'organe mobile vers la position déployée ou la position rétractée, les moyens motorisés étant de préférence formés par les moyens de génération d'énergie fonctionnant en moteur.
- La flottabilité de l'élément flottant est approximativement égale au double de son poids, l'élément flottant ayant de préférence une forme générale aplatie, et circulaire ou polygonale.
- Au moins une entretoise relie l'élément flottant à l'élément de guidage, cette entretoise comportant une tige, reliée à l'élément de guidage à l'aide d'une liaison pivot, et coulissant dans une douille de guidage, cette douille de guidage étant reliée à la périphérie de l'élément flottant à l'aide d'une liaison pivot, de sorte que l'entretoise est réglable en longueur.
- L'élément flottant comporte une cloison périphérique, s'étendant sensiblement verticalement depuis cet élément flottant, et délimitant une enceinte avec cet élément flottant et le mât, cette enceinte étant ouverte par le dessus.
- La cloison périphérique comporte des ouvertures munies chacune d'un clapet anti-retour, autorisant le passage d'eau depuis l'enceinte vers l'extérieur, et interdisant le passage d'eau depuis l'extérieur vers l'enceinte à travers ces ouvertures.

L'invention sera mieux comprise à la lecture de la description qui va suivre, donnée uniquement à titre d'exemple et faite en se référant aux figures annexées, dans lesquelles :
- la figure 1 est une vue en coupe longitudinale d'un dispositif de conversion d'énergie selon un premier mode de réalisation de l'invention ;
- la figure 2 est une vue similaire à la figure 1 d'un organe fixe du dispositif de la figure 1 ;
- la figure 3 est une vue du dessus de l'organe fixe de la figure 2 ;
- la figure 4 est une vue en coupe longitudinale d'un organe mobile du dispositif de conversion d'énergie de la figure 1 ;
- la figure 5 est une vue du dessus de l'organe mobile de la figure 4 ;
- la figure 6 est une vue schématique du dessus de moyens de génération d'énergie électrique du dispositif de conversion d'énergie de la figure 1, selon une première variante ;
- la figure 7 est une vue similaire à la figure 1 du dispositif de conversion d'énergie de la figure 1 en position rétractée pour son transport et son installation sur une étendue d'eau ;
- la figure 8 est une vue similaire à la figure 7 d'un dispositif de conversion d'énergie selon un deuxième mode de réalisation de l'invention, en position rétractée pour son transport et son installation sur une étendue d'eau ;
- la figure 9 est une vue similaire à la figure 1 d'un dispositif de conversion d'énergie selon un troisième mode de réalisation de l'invention ;
- les figures 10 à 12 représentent respectivement trois variantes de clapets anti-retour équipant le dispositif de conversion de la figure 9 ;
- la figure 13 est une vue en coupe axiale d'un système d'entraînement équipant les moyens de génération d'énergie électrique, selon une seconde variante ;
- les figures 14 et 15 sont des vues en coupes transversales, respectivement selon les flèches XIV et XV, du système d'entraînement de la figure 13.

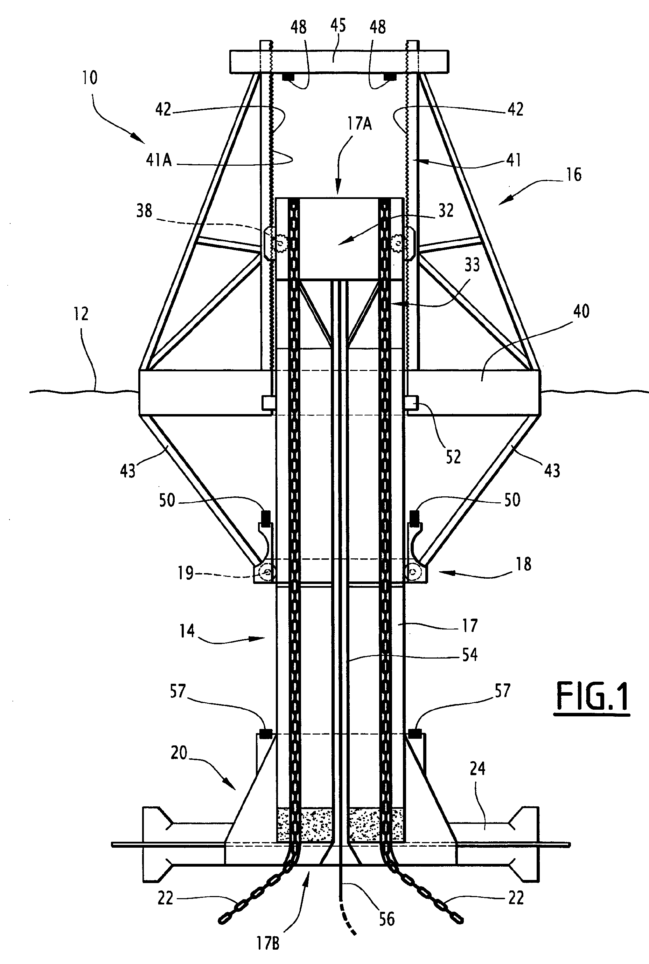

On a représenté sur la figure 1 un dispositif 10 de conversion de l'énergie mécanique de la houle d'une étendue d'eau, telle qu'une mer ou un océan, en énergie électrique. La surface de l'étendue d'eau est désignée par la référence 12.

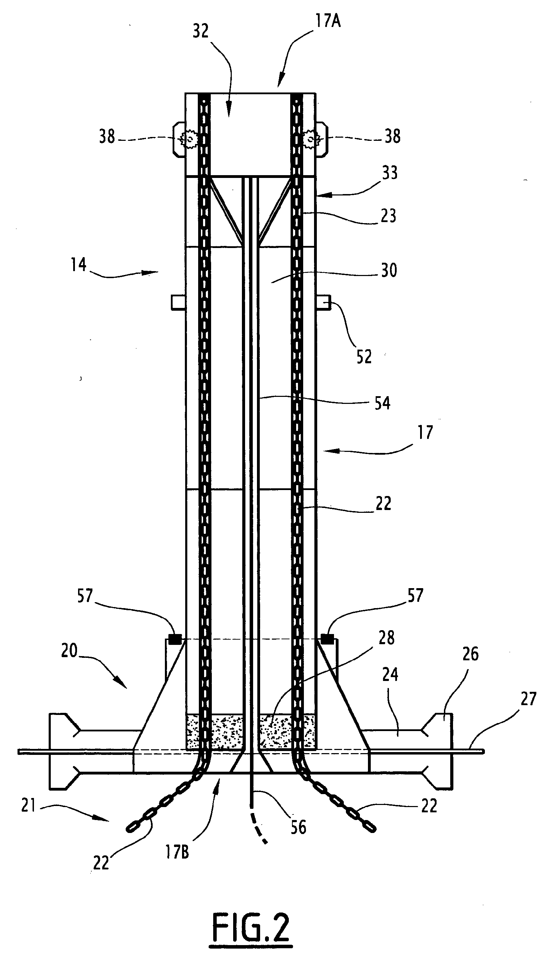

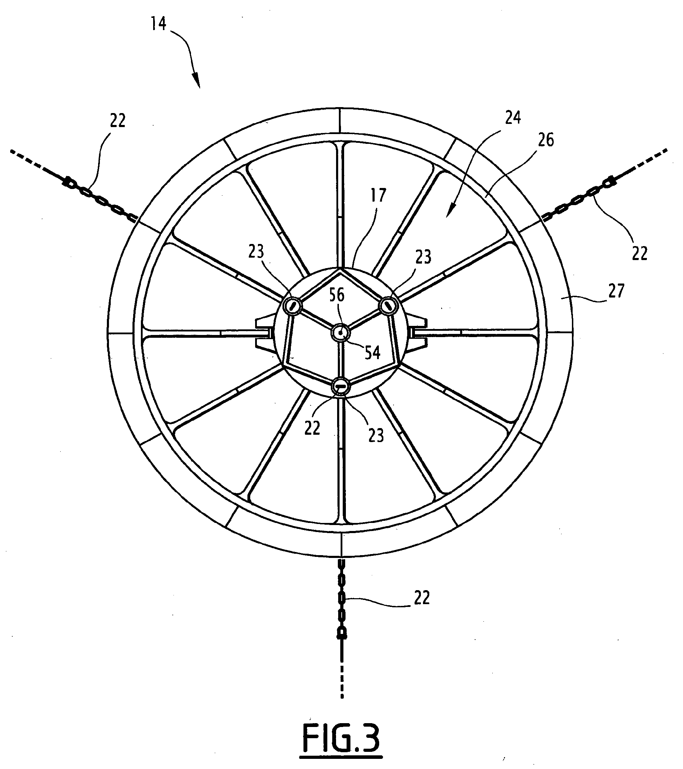

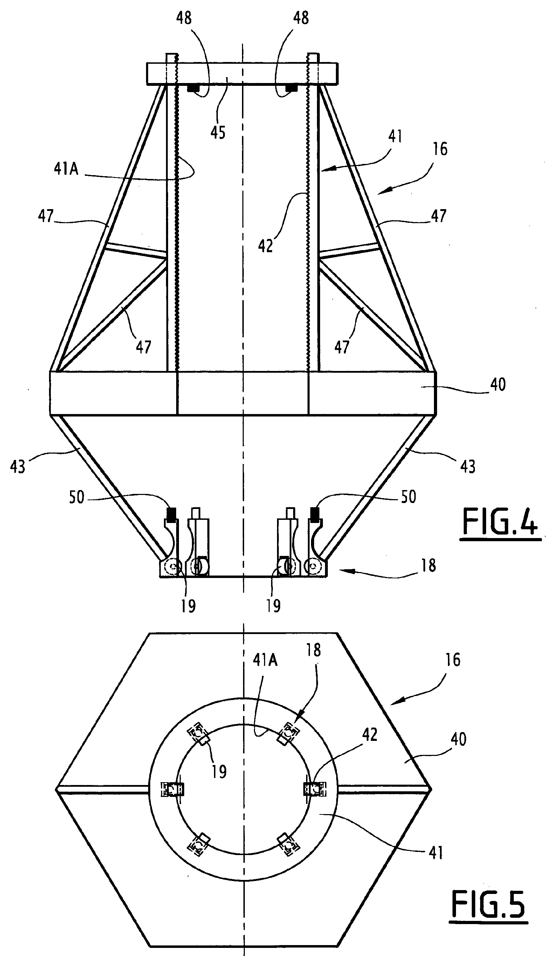

Le dispositif de conversion 10 comporte un organe sensiblement fixe 14, représenté plus en détail sur les figures 2 et 3, et un organe 16 mobile par rapport à l'organe fixe 14, représenté plus en détail sur les figures 4 et 5.

L'organe fixe 14 comporte un mât 17 d'axe sensiblement vertical, le long duquel l'organe mobile 16 est destiné à se déplacer, en fonction de la houle de l'étendue d'eau.

A cet effet, l'organe mobile 16 comporte un élément de guidage 18, coopérant avec le mât 17 de façon à former ensemble des moyens de guidage sensiblement verticaux du déplacement de l'organe mobile 16 par rapport à l'organe fixe 14. Ainsi, le mât 17 et l'élément de guidage 18 forment ensemble une liaison glissière sensiblement verticale. L'élément de guidage 18 comporte par exemple des roulettes 19, destinées à rouler sur une paroi extérieure de ce mât 17.

On notera que l'organe mobile 16 peut comporter indifféremment un unique élément de guidage 18 annulaire, comportant des roulettes 19 réparties sur la périphérie du mât 17, ou une pluralité d'éléments de guidage 18 répartis sur la périphérie du mât 17, comportant chacun une roulette 19.

L'organe mobile 16 comporte également au moins un élément flottant 40 qui sera décrit ultérieurement.

L'organe fixe 14 comporte des moyens 20 de stabilisation par rapport au fond de l'étendue d'eau, destinés à maintenir l'organe 14 sensiblement fixe et le mât 17 sensiblement vertical, en particulier en cas de mer agitée.

Les moyens de stabilisation 20 comportent des moyens d'ancrage 21 au fond de l'étendue de l'eau, comprenant au moins une, de préférence trois, lignes d'ancrage 22 destinées à être ancrées au fond de l'étendue d'eau. Afin de garantir une stabilité optimale, chaque ligne d'ancrage 22 est fixée à une extrémité supérieure 17A du mât 17, et s'étend le long de ce mât 17 jusqu'à une extrémité inférieure 17B de ce mât 17. Par exemple, le mât 17 est creux et comporte un passage 23 pour chaque ligne d'ancrage 22 sur toute sa longueur.

Chaque ligne d'ancrage 22 est formée par une chaîne, ou par tout autre organe approprié.

Les moyens de stabilisation 20 comportent également une embase d'amortissement 24. De préférence, l'embase d'amortissement 24 est symétrique par rapport à l'axe du mât 17, et a par exemple une forme générale circulaire, telle que représentée sur la figure 2, ou polygonale.

L'embase d'amortissement 24 comporte une jupe périphérique 26 destinée à contenir la masse d'eau entraînée, associée à l'embase 24 afin d'augmenter l'inertie de masse de cette embase 24, donc de limiter ses mouvements verticaux.

Par ailleurs, l'embase 24 a un diamètre suffisamment important pour assurer une fonction d'amortissement hydrodynamique dans la direction verticale, ce qui limite le débattement du mât 17 par rapport à cette direction verticale. En effet, un tel débattement du mât 17 est amorti, donc réduit de façon significative, par la résistance et la masse de l'eau coopérant avec l'embase 24.

Afin d'optimiser cet amortissement, l'embase 24 est de préférence prolongée à sa périphérie par une margelle 27.

Les moyens de stabilisation 20 comportent également une masse de lestage 28 portée à proximité de l'extrémité inférieure 17B du mât 17. Par exemple, la masse de lestage 28 est une masse solide, ou un réservoir contenant une masse liquide de densité supérieure à celle de l'eau.

Enfin, les moyens de stabilisation 20 comportent un réservoir étanche 30, représenté en particulier sur la figure 2, porté par une partie supérieure du mât 17. Ce réservoir étanche 30 est rempli d'un fluide de densité inférieure à celle de l'eau, par exemple d'air, de sorte que ce réservoir étanche 30 compense le poids de l'organe fixe 14, et assure ainsi sa flottaison, l'empêchant de couler lorsqu'il est plongé dans l'eau.

L'organe fixe 14 porte des moyens 32 de génération d'énergie électrique, destinés à être agencés entre l'organe fixe 14 et l'organe mobile 16, de façon à convertir en énergie électrique l'énergie mécanique issue du mouvement vertical de l'organe mobile 16 par rapport à l'organe fixe 14.

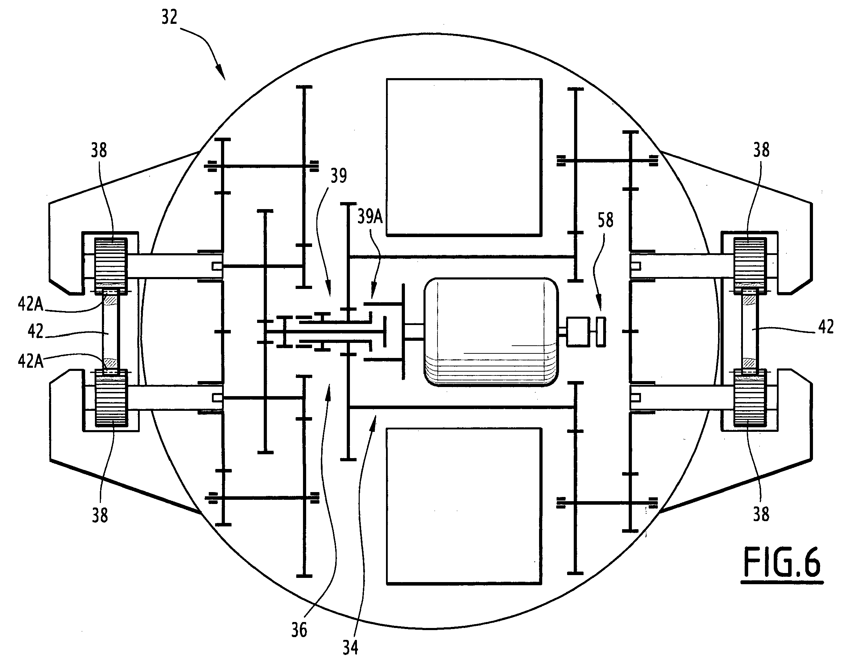

Les moyens de génération d'énergie électrique 32, représentés plus en détail sur la figure 6, sont portés par le mât 17 au dessus du réservoir étanche 30.

Le mât 17 comporte, entre le compartiment 30 et les moyens de génération d'énergie électrique 32, une structure 33 de flottabilité faible, destinée à minimiser les efforts d'excitation verticaux générés par le passage de la houle ou des vagues.

Les moyens de génération d'énergie 32 comportent notamment un générateur d'énergie électrique classique, comprenant un stator 34 porté par le mât 17 et un rotor 36 relié cinématiquement à au moins un, de préférence deux paires de pignons 38.

De préférence, chaque paire de pignons 38 est reliée au rotor 36 par un mécanisme 39 de roue libre, portant un volant d'inertie 39A. Les mécanismes de roue libre 39 associés aux paires de pignons 38 sont de préférence distincts, et opposés, de sorte que le rotor 36 est entraîné en rotation par l'une ou l'autre des paires de pignons 38, en fonction de leur sens de rotation.

Conformément au mode de réalisation représenté, le générateur d'énergie comporte un unique rotor 36, auquel sont reliées les deux paires de pignons 38. En variante, le générateur d'énergie pourrait comporter deux rotors, chacun étant relié à une paire distincte de pignons.

Ainsi que représenté sur les figures 4 et 5, l'élément flottant 40 est destiné à flotter en surface 12 de l'étendue d'eau, de sorte que la houle entraîne l'organe mobile 14 en mouvement, dans la direction verticale le long du mât 17 grâce aux moyens de guidage 17, 18.

L'élément flottant 40 a par exemple une forme générale aplatie, de préférence circulaire ou polygonale comme cela est représenté sur la figure 5.

De préférence, la flottabilité de l'élément flottant 40 est approximativement égale au double de son poids, de façon à pouvoir être entraînée verticalement de manière optimale vers le haut lors du passage d'une houle, et vers le bas après le passage de cette houle. On rappelle que la flottabilité est une force verticale, dirigée de bas en haut, qu'un fluide exerce sur un objet immergé. La flottabilité de l'élément flottant 40 dépend en particulier de sa masse volumique et de sa forme.

L'élément flottant 40 est relié à l'élément de guidage 18 à l'aide d'entretoises 43. Par exemple, chaque entretoise 43 est formée par une tige rigide, s'étendant entre la périphérie de l'élément flottant 40 et l'élément de guidage 18, comme cela est représenté sur la figure 4.

L'organe mobile 16 comporte un élément tubulaire creux 41, à l'intérieur duquel est logé le mât 17, comme cela est représenté sur la figure 1. L'élément tubulaire creux 41 est solidaire, à son extrémité inférieure, avec l'élément flottant 40, et solidaire, à son extrémité supérieure, avec un organe annulaire 45 de rigidification.

L'élément tubulaire creux 41 est délimité par une paroi interne 41A portant au moins une, de préférence deux crémaillères 42, chacune destinée à engrener avec une paire de pignons 38, de façon à actionner le rotor 36 en rotation lorsque l'organe mobile 16 se déplace verticalement, par rapport à l'organe fixe 14, le long du mât 17.

Conformément au mode de réalisation représenté, chaque crémaillère 42 a une forme générale de parallélépipède rectangle s'étendant parallèlement au mât 17, comportant notamment une face longitudinale fixée à la paroi interne 41 A de l'élément tubulaire creux 41, et deux face latérales, adjacentes à la face longitudinale, portant chacune une denture 42A destinée à coopérer avec l'un des pignons 38, comme cela est représenté sur la figure 6. Une telle crémaillère 42 est dite à double denture.

En variante, chaque crémaillère pourrait comporter une unique denture ménagée sur une seconde face longitudinale opposée à celle qui est fixée à la paroi interne de l'élément tubulaire creux 41. Une telle crémaillère 42 est dite à simple denture. Dans ce cas, chaque crémaillère ne coopérerait qu'avec un seul pignon des moyens de génération d'énergie 32.

L'élément tubulaire 41, en combinaison avec l'élément de guidage 18, permet de garder l'élément flottant 40 perpendiculaire au mât 17. En effet, les pignons 38, qui coopèrent avec les crémaillères 42, réalisent également un guidage vertical de l'organe mobile 16 par rapport à l'organe fixe 14.

De préférence, l'organe mobile 16 comporte des éléments de renfort 47, formés en particulier par des entretoises 47 s'étendant entre l'organe annulaire de rigidification 45 et la périphérie de l'élément flottant 40, et/ou entre l'élément tubulaire creux 41 et la périphérie de l'élément flottant 40.

Afin d'assurer que les organes fixe 14 et mobile 16 ne se désolidarisent pas, ces organes fixe 14 et mobile 16 comportent des butées complémentaires de fin de course, limitant leur déplacement vertical relatif.

En particulier, l'organe mobile 16 comporte des butées supérieures 48 de fin de course, portées par l'élément annulaire de rigidification 45, destinées à coopérer avec des premières butées complémentaires portées par l'extrémité supérieure 17A du mât 17 lorsque l'organe mobile 16 est au plus bas par rapport à l'organe fixe 14. L'organe mobile 16 comporte également des butées inférieures 50 de fin de course, destinées à coopérer avec des secondes butées complémentaires 52 portées par le mât 17, lorsque l'organe mobile 16 est au plus haut par rapport à l'organe fixe 14.

De préférence, les butées supérieures 48, inférieures 50 et complémentaires 52 sont en caoutchouc, ce qui permet d'amortir d'éventuels chocs entre les butées lors de fins de courses.

L'invention permet d'alimenter de manière simple le générateur d'énergie électrique 34 en énergie mécanique. La houle entraîne l'élément flottant 40 en mouvement le long du mât 17 grâce aux moyens de guidage vertical, les crémaillères 42 entraînant alors en rotation les pignons 38, qui entraînent à leur tour le rotor 36. L'énergie mécanique ainsi récupérée par le rotor 36 est convertie en énergie électrique par le générateur 34.

Afin de transférer l'énergie électrique, le mât 17 comporte de préférence un passage 54 pour un câble électrique 56, permettant le convoyage de l'énergie électrique, par exemple vers au moins une batterie de stockage.

On notera que les mécanismes 39 de roue libre opposés, et le volant d'inertie 39A, permettent d'assurer un entraînement constant du rotor 36.

Ainsi, lorsque l'organe mobile 16 se déplace vers le haut, les crémaillères 42 entraînent les paires de pignons 38 en rotation dans un premier sens. Une première paire de pignons 38 entraîne alors le rotor 36 en rotation, alors qu'une seconde paires de pignons 38 est libre en rotation.

Puis, lorsque l'organe mobile 16 se déplace vers le bas, les crémaillères 42 entraînent les paires de pignons 38 en rotation dans un second sens. C'est alors la seconde paire de pignons 38 qui entraîne le rotor 36 en rotation, et la première paire de pignons 38 qui est libre en rotation.

Par ailleurs, le volant d'inertie 39A permet d'entraîner le rotor 36 en rotation même lorsque le déplacement de l'organe mobile 16 par rapport à l'organe mobile 14 change de sens, annulant ainsi sa vitesse.

En effet, lorsque l'organe mobile 16 se déplace, une partie de l'énergie mécanique fournie est emmagasinée par le volant d'inertie 39A. Lorsque le déplacement de l'organe mobile 16 change de sens, cette roue libre empêche le blocage de la rotation du rotor 36, ce rotor 36 étant entraîné en rotation par le volant d'inertie 39A qui restitue l'énergie mécanique emmagasinée.

On notera que le dispositif 10, dont l'organe mobile 16 se déplace uniquement sensiblement dans la direction verticale, est peu encombrant dans les directions horizontales. Ainsi, il est possible de disposer un grand nombre de dispositifs 10 sur une étendue d'eau, avec une forte densité surfacique.

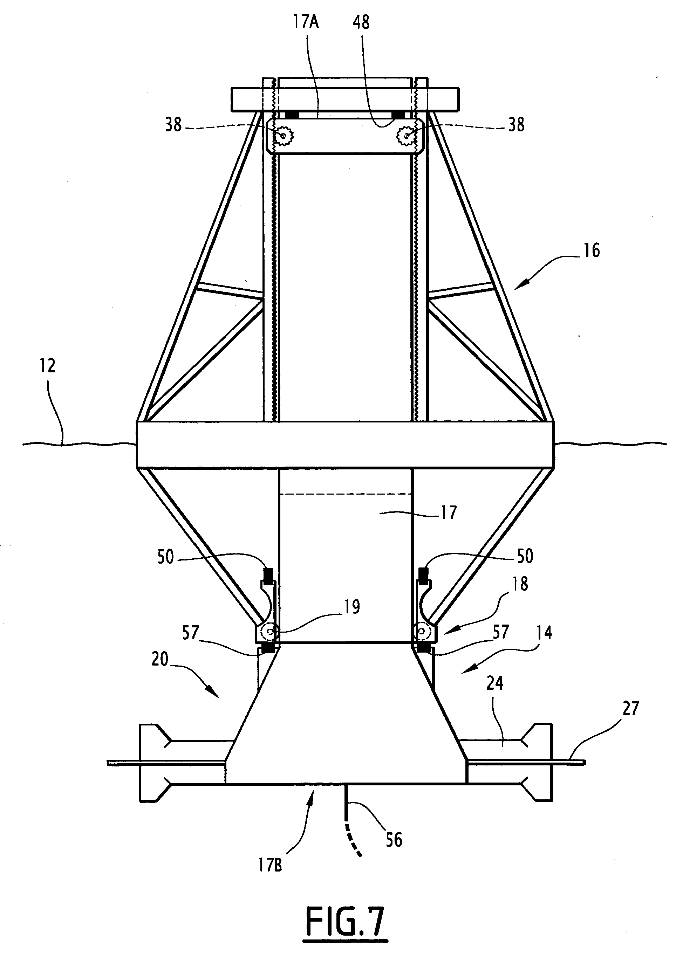

Afin d'amener le dispositif 10 en position sur l'étendue d'eau, celui-ci est de préférence agencé en position rétractée, telle que représentée sur la figure 7.

De préférence, les butées supérieures 48 de fin de course sont escamotables, de façon à permettre l'organe mobile 16 de se déplacer au plus bas par rapport à l'organe fixe 14, par exemple jusqu'à contact avec des butées inférieures 57 portées par le mât 17 au dessus de l'embase 24. Ainsi, on autorise une plus grande compacité du dispositif 10 en transport lorsque ces butées supérieures 48 sont escamotées.

Le dispositif 10 est ainsi remorqué, flottant à la surface de l'étendue d'eau grâce à l'élément flottant 40 et au réservoir étanche 30.

Pendant ce remorquage, l'organe mobile 16 est immobilisé par rapport à l'organe fixe 14, comme cela est représenté sur la figure 7. Par exemple, un élément de freinage 58 du dispositif de génération d'énergie 32 bloque le rotor 36 en position.

Lorsque le dispositif 10 est à une position souhaitée sur l'étendue d'eau, les lignes d'ancrage 22 sont déployées de façon à ancrer le dispositif 10 au fond de cette étendue d'eau.

L'élément de freinage 58 est ensuite relâché, et l'organe mobile 16 est ainsi libéré par rapport à l'organe fixe 14.

De préférence, le dispositif de génération d'énergie 32 peut fonctionner en moteur, ou comporte des moyens moteurs, de façon à amener l'organe mobile 16 jusqu'à la surface 12 de l'étendue d'eau. En effet, les pignons 38 permettent, lorsqu'ils sont motorisés, d'actionner les crémaillères 42 de façon à déplacer l'organe mobile jusqu'à une position souhaitée.

Dans ce cas, le dispositif de génération d'énergie 32 comporte de préférence des moyens de blocage des roues libre 39, destinés à être activés lorsque les pignons sont motorisés, de façon que tous les pignons soient actifs pour le déplacement de l'organe mobile 16 lors de ces opérations d'installation.

On peut prévoir à cet effet un pignon inverseur pouvant basculer entre une position dans laquelle il court-circuite l'une des roues libres, reliant alors la paire de pignons 38 correspondante au rotor 36, et une position dans laquelle ce pignon inverseur est inactif, la paire de pignons 38 étant alors reliée au rotor 36 uniquement par la roue libre 39 correspondante.

On notera que les pignons 38 permettent, lorsqu'ils sont motorisés, de contraindre l'organe mobile 16 dans sa position basse par rapport à l'organe fixe 14, la contrainte étant maintenue grâce à l'élément de freinage 58.

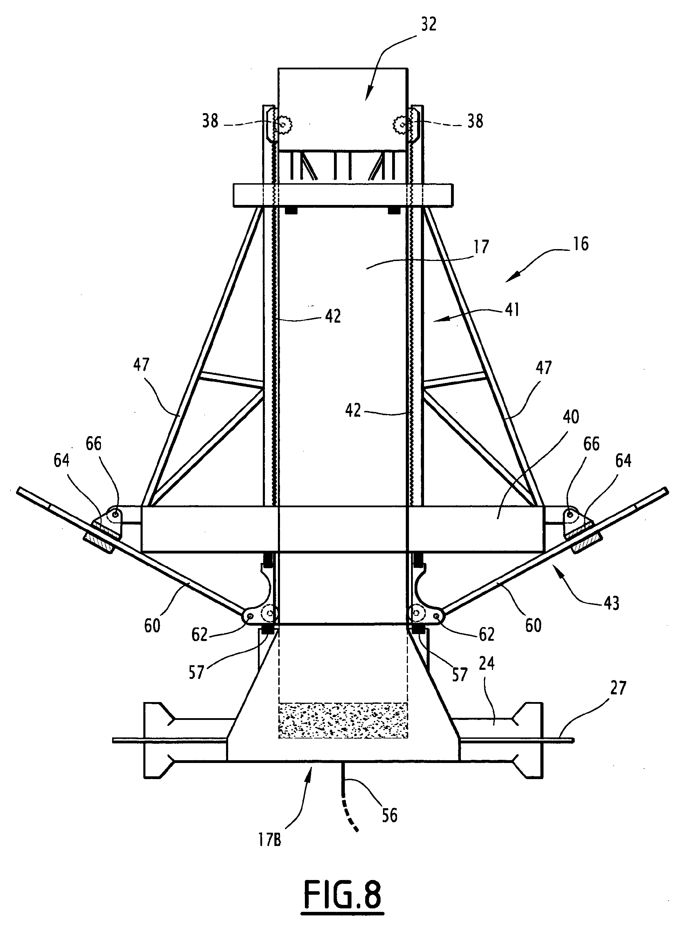

On a représenté sur la figure 8 un dispositif de conversion 10 selon un deuxième exemple de mode de réalisation de l'invention. Sur cette figure, les éléments analogues à ceux des figures précédentes sont désignés par des références identiques.

Conformément au deuxième mode de réalisation, les entretoises 43 reliant l'élément flottant 40 à l'élément de guidage 18 est de longueur variable.

A cet effet, chaque entretoise 43 comporte une tige 60, reliée à l'élément de guidage 18 à l'aide d'une liaison pivot 62, et coulissant dans une douille de guidage 64, cette douille de guidage 64 étant reliée à la périphérie de l'élément flottant 40 à l'aide d'une liaison pivot 66.

La douille de guidage 64 comporte des moyens (non représentés) de verrouillage de la tige 60 en position, destinés à verrouiller le coulissement de la tige 60 dans la douille de guidage 64 lorsque ces moyens de verrouillage sont activés, et d'autoriser ce coulissement lorsqu'ils sont désactivés.

Lorsque la tige 60 coulisse dans la douille de guidage 64, la longueur de l'entretoise varie, entre une position de remorquage, dans laquelle l'élément de guidage 18 est relativement proche de l'élément flottant 40, et une position d'utilisation, dans laquelle l'élément de guidage 18 est relativement éloignée de l'élément flottant 40.

Grâce à ces entretoises 43 réglables en longueur, il est possible de limiter le tirant d'eau du dispositif 10 lors de son remorquage, en diminuant au maximum la longueur des entretoises 43. Ainsi, on réduit l'encombrement du dispositif 10 lors de son remorquage.

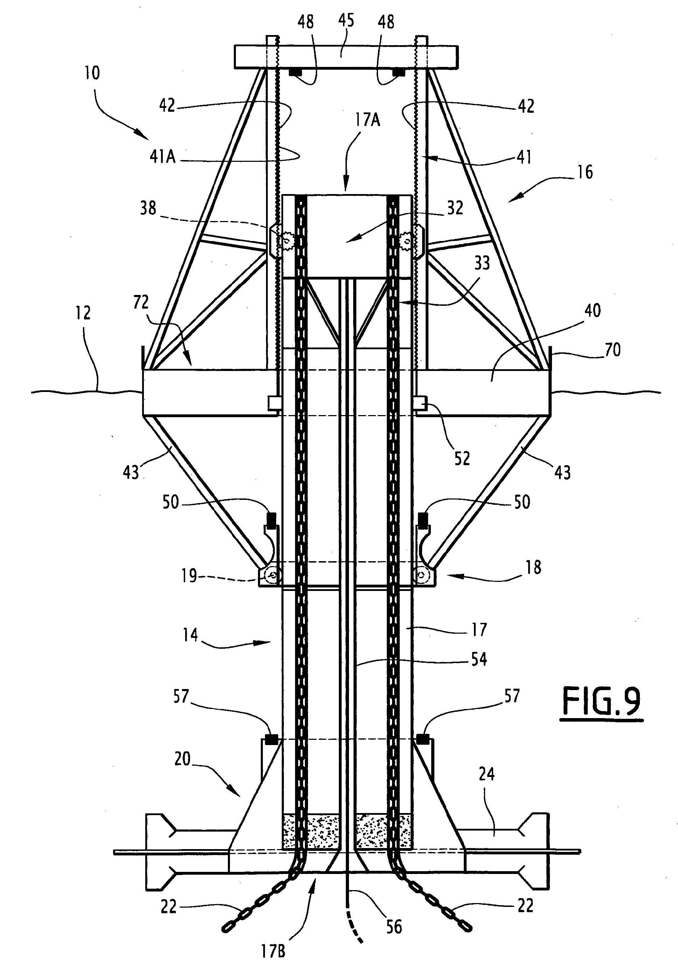

On a représenté sur la figure 9 un dispositif de conversion 10 selon un troisième exemple de mode de réalisation de l'invention. Sur cette figure, les éléments analogues à ceux des figures précédentes sont désignés par des références identiques.

Conformément à ce troisième mode de réalisation, l'élément flottant 40 comporte une cloison périphérique 70, s'étendant sensiblement verticalement depuis l'élément flottant 40, et délimitant une enceinte 72 avec cet élément flottant 40 et le mât 17. Cette enceinte 72 est ouverte par le dessus. La cloison périphérique 70 comporte des ouvertures 74 munies chacune d'un clapet anti-retour 76, autorisant le passage d'eau depuis l'enceinte 72 vers l'extérieur, et interdisant le passage d'eau depuis l'extérieur vers l'enceinte 72 à travers les ouvertures 74.

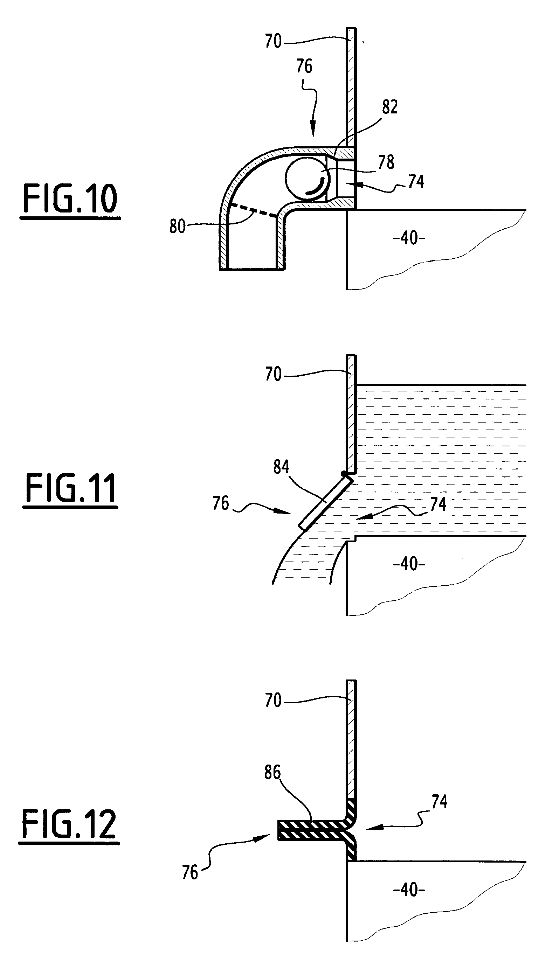

On a représenté sur les figures 10 à 12 trois exemples de clapets anti-retour 76.

Le clapet 76 représenté sur la figure 10 comporte une boule 78 mobile dans un logement délimité par une grille 80 et un joint annulaire 82. Lorsque la boule 78 est entraînée par de l'eau provenant de l'extérieur vers l'enceinte 72, elle coopère avec le joint annulaire 82 de façon à refermer de manière étanche l'ouverture 74 correspondante. En revanche lorsque la boule 78 est entraînée par de l'eau provenant de l'enceinte 72 vers l'extérieur, elle libère le joint 82 et elle est retenue par la grille 80, et l'eau peut passer à travers le joint 82 et cette grille 80.

Le clapet 76 représenté sur la figure 11 comporte une trappe 84. Cette trappe 84 est mobile entre une position fermée, dans laquelle elle est entraînée par de l'eau provenant de l'extérieur vers l'enceinte 72, et une position ouverte dans laquelle elle est entraînée par de l'eau provenant l'enceinte 72 vers l'extérieur.

Le clapet 76 représenté sur la figure 12 comporte une lèvre souple circulaire 86, de type en « bec de canard », s'étendant entre une extrémité ouverte sur le contour de l'ouverture 74 correspondante, et une extrémité aplatie. De manière classique, l'eau ne peut passer que depuis l'extrémité ouverte vers l'extrémité aplatie, c'est-à-dire depuis l'enceinte 72 vers l'extérieur.

On pourrait également imaginer tout autre type de clapet n'autorisant le passage de l'eau que depuis l'enceinte 72 vers l'extérieur.

En cas de houles importantes, il peut arriver que l'eau de la mer submerge entièrement l'élément flottant 40. Dans ce cas, l'eau entre dans l'enceinte 72 par le dessus, formant ainsi une masse additionnelle s'ajoutant à celle de l'élément flottant 40. Cette masse d'eau augmente donc la force fournie aux moyens de génération d'énergie électrique 32 lors de la descente de l'élément flottant 40 le long du mât 17, et augmente donc l'énergie électrique générée.

Grâce aux clapets 76, l'eau est évacuée de l'enceinte 72 au cours de la descente de l'élément flottant 40, afin que la masse d'eau n'entrave pas la remontée de l'élément flottant 40 le long du mât 17.

De préférence, on prévoira suffisamment d'orifices 74 pour permettre une vidange complète de l'enceinte 72 au cours de la descente.

Avantageusement, la cloison 70 présente une hauteur choisie entre un quart et un demi de la hauteur de l'élément flottant 40 dans la direction verticale.

A titre d'exemple, pour un élément flottant 40 présentant un diamètre de 24m et une hauteur de 3m, et pour une cloison périphérique 70 présentant une hauteur de 0.5m, l'enceinte 72 peut recevoir une masse d'eau de 225 tonnes.

La cloison périphérique 70 permet donc d'augmenter la production d'électricité, pour un coût supplémentaire relativement faible.

On notera que l'invention n'est pas limitée aux modes de réalisation précédemment décrits, et pourrait présenter des variantes sans sortir du cadre des revendications.

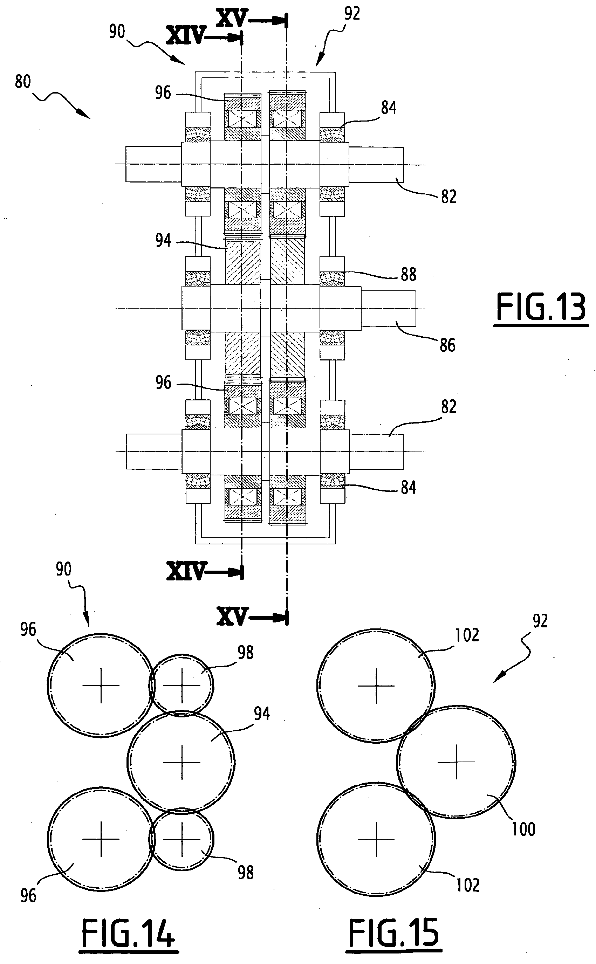

En particulier, on pourrait prévoir, entre les pignons 38 et le rotor 36, un système d'entraînement inversible 80 tel que représenté sur les figures 13 à 15.

Le système d'entraînement 80 comporte deux arbres d'entrée 82, chaque arbre d'entrée 82 étant relié de part et d'autre à un pignon 38, et étant guidé en rotation autour de son axe par des roulements 84 classiques.

Le système d'entraînement 80 comporte également un arbre de sortie 86, relié au rotor 36, et guidé en rotation autour de son axe par des roulements 88 classiques.

Les arbres d'entrée 82 sont reliés cinématiquement à l'arbre de sortie 86 à l'aide de premiers 90 et seconds 92 moyens d'engrenage distincts, notamment représentés respectivement sur les figures 14 et 15.

Les premiers moyens d'engrenage 90 comportent une première roue dentée 94, solidaire de l'arbre de sortie 86, et deux premières roues libres dentées 96, agencées sur un arbre d'entrée 82 respectif. Les premiers moyens d'engrenage 90 comportent également deux pignons intermédiaires 98, chacun engrenant avec une première roue libre dentée 96 respective et la première roue dentée 94.

Les premières roues libres dentées 96 sont adaptées pour entraîner les pignons intermédiaires 98 en rotation lorsque les arbres d'entrée 82 sont entraînés dans un premier sens de rotation, et pour tourner librement lorsque les arbres d'entrée 82 sont entraînés dans un second sens de rotation opposé au premier.

Par ailleurs, les seconds moyens d'engrenage 92 comportent une seconde roue dentée 100, solidaire de l'arbre de sortie 86, et deux seconds roues libres dentées 102, agencées sur un arbre d'entrée 82 respectif, chacune de ces secondes roues libres dentées 102 engrenant avec la seconde roue dentée 100.

Les secondes roues libres dentées 102 sont adaptées pour entraîner la seconde roue dentée 100 lorsque les arbres d'entrée 82 sont entraînés dans le second sens de rotation, et pour tourner librement lorsque les arbres d'entrée 82 sont entraînés dans le premier sens de rotation.

Lorsque les arbres d'entrée 82 sont entraînés dans le premier sens de rotation, correspondant par exemple à la montée de l'organe mobile 16 par rapport à l'organe fixe 14, les premiers moyens d'engrenage 90 entraînent l'arbre de sortie 86 en rotation. En revanche, lorsque les arbres d'entrée 82 sont entraînés dans le second sens de rotation, correspondant par exemple à la descente de l'organe mobile 16 par rapport à l'organe fixe 14, les seconds moyens d'engrenage 92 entraînent l'arbre de sortie 86 en rotation.

Ainsi, l'arbre de sortie 86, donc le rotor 36, est entraîné en rotation en continu, indépendamment des variations du sens du déplacement de l'organe mobile 16 par rapport à l'organe fixe 14.

## Revendications

1. Dispositif (10) de conversion de l'énergie mécanique de la houle d'une étendue d'eau (12), telle qu'une mer, en énergie électrique, comportant :
- un organe (14) sensiblement fixe, comportant des moyens (20) de stabilisation par rapport au fond de l'étendue d'eau,
- un organe (16) mobile par rapport à l'organe fixe (14), comportant au-moins un élément flottant (40) destiné à rester en surface (12) de l'étendue d'eau,
de sorte que la houle entraîne cet organe mobile (16) en mouvement,
- des moyens de guidage (17, 18) sensiblement vertical du déplacement de l'organe mobile (16) par rapport à l'organe fixe (14), comprenant au moins un mât (17) sensiblement vertical, porté par l'organe fixe (14), et au moins un élément de guidage complémentaire (18), porté par l'organe mobile (16), formant avec le mât (17) une liaison glissière sensiblement verticale,
- des moyens (32) de génération d'énergie électrique, agencés entre l'organe fixe (14) et l'organe mobile (16), destinés à convertir en énergie électrique l'énergie mécanique issue du mouvement vertical de l'organe mobile (16) par rapport à l'organe fixe (14),
les moyens de stabilisation (20) comportant une embase d'amortissement (24) agencée à une extrémité inférieure (17B) du mât (17), et une masse de lestage (28) fixée au mât (17), **caractérisé en ce que** ladite embase d'amortissement (24) comporte une jupe périphérique (26) destinée à contenir la masse d'eau entraînée par l'embase.

2. Dispositif (10) de conversion d'énergie selon la revendication 1, dans lequel les moyens de génération d'énergie (32) comportent :
- un générateur d'énergie électrique, comprenant un stator (34) porté par l'organe fixe (14), et un rotor (36) portant un pignon (38),
- au moins une crémaillère (42), portée par l'organe mobile (16) sensiblement verticalement, destinée à coopérer avec le pignon (38) pour actionner le rotor (36) en rotation lorsque l'organe mobile (16) se déplace verticalement par rapport à l'organe fixe (14).

3. Dispositif (10) de conversion d'énergie selon la revendication 2, dans lequel le pignon (38) est relié au rotor (36) par un mécanisme (39) de roue libre portant un volant d'inertie (39A).

4. Dispositif (10) de conversion d'énergie selon la revendication 2, comprenant un système d'entraînement (80) du rotor (36) par le pignon (38), comportant :
- au moins un arbre d'entrée (82) relié au pignon (38),
- un arbre de sortie (86), relié au rotor (36),
- des premiers moyens d'engrenage (90), comportant une première roue dentée (94) solidaire de l'arbre de sortie (86), et une première roue libre dentée (96) agencée sur l'arbre d'entrée (82), et un pignon intermédiaire (98) engrenant avec la première roue libre dentée (96) et la première roue dentée (94), la première roue libre dentée (96) étant adaptée pour entraîner le pignon intermédiaire (98) en rotation lorsque l'arbre d'entrée (82) est entraîné dans un premier sens de rotation, et pour tourner librement lorsque l'arbre d'entrée (82) est entraîné dans un second sens de rotation opposé au premier, et
- des seconds moyens d'engrenage (92), comportant une seconde roue dentée (100), solidaire de l'arbre de sortie (86), et une seconde roue libre dentée (102), agencée sur l'arbre d'entrée (82), et engrenant avec la seconde roue dentée (100), la seconde roue libre dentée (102) étant adaptée pour entraîner la seconde roue dentée (100) lorsque l'arbre d'entrée (82) est entraîné dans le second sens de rotation, et pour tourner librement lorsque l'arbre d'entrée (82) est entraîné dans le premier sens de rotation.

5. Dispositif (10) de conversion d'énergie selon l'une quelconque des revendications 2 à 4, dans lequel l'organe mobile (16) comporte un élément tubulaire creux (41), à l'intérieur duquel est logé le mât (17), l'élément tubulaire creux (41) étant délimitée par une paroi interne portant la crémaillère (42).

6. Dispositif (10) de conversion d'énergie selon l'une quelconque des revendications précédentes, dans lequel le mât (17) est creux, et comporte un passage (54) pour un câble électrique (56) de sortie du générateur d'énergie électrique.

7. Dispositif (10) de conversion d'énergie selon l'une quelconque des revendications précédentes, dans lequel les moyens de stabilisation (20) comportent des moyens (21) d'ancrage au fond de l'étendue d'eau.

8. Dispositif (10) de conversion d'énergie selon la revendication 7, dans lequel les moyens d'ancrage (21) comprennent au moins une ligne d'ancrage (22) fixée à une extrémité supérieure (17A) du mât (17), et s'étendant le long du mât (17) jusqu'à une extrémité inférieure (17B) du mât (17).

9. Dispositif (10) de conversion d'énergie selon l'une quelconque des revendications précédentes, dans lequel les organes fixe (14) et mobile (16) comprennent des butées complémentaires (48, 50, 52) de fin de course limitant le déplacement vertical relatif de ces organes fixe (14) et mobile (16) entre des positions déployée et rétractée.

10. Dispositif (10) de conversion d'énergie selon les revendication 2 et 9 prises en combinaison, comportant des moyens motorisés destinés à actionner le pignon (38) de façon à déplacer l'organe mobile (16) vers la position déployée ou la position rétractée, les moyens motorisés étant de préférence formés par les moyens de génération d'énergie (32) fonctionnant en moteur.

11. Dispositif (10) de conversion d'énergie selon l'une quelconque des revendications précédentes, dans lequel la flottabilité de l'élément flottant (40) est approximativement égale au double de son poids, l'élément flottant (40) ayant de préférence une forme générale aplatie, et circulaire ou polygonale.

12. Dispositif (10) de conversion d'énergie selon l'une quelconque des revendications précédentes, dans lequel au moins une entretoise (43) relie l'élément flottant (40) à l'élément de guidage (18), cette entretoise (43) comportant une tige (60), reliée à l'élément de guidage (18) à l'aide d'une liaison pivot (62), et coulissant dans une douille de guidage (64), cette douille de guidage (64) étant reliée à la périphérie de l'élément flottant (40) à l'aide d'une liaison pivot (66), de sorte que l'entretoise (43) est réglable en longueur.

13. Dispositif (10) de conversion d'énergie selon l'une quelconque des revendications précédentes, dans lequel l'élément flottant (40) comporte une cloison périphérique (70), s'étendant sensiblement verticalement depuis cet élément flottant (40), et délimitant une enceinte (72) avec cet élément flottant (40) et le mât (17), cette enceinte (72) étant ouverte par le dessus.

14. Dispositif (10) de conversion d'énergie selon la revendication 13, dans lequel la cloison périphérique (70) comporte des ouvertures (74) munies chacune d'un clapet anti-retour (76), autorisant le passage d'eau depuis l'enceinte (72) vers l'extérieur, et interdisant le passage d'eau depuis l'extérieur vers l'enceinte (72) à travers ces ouvertures (74).

## Patentansprüche

1. Vorrichtung (10) zum Umwandeln der mechanischen Wellenenergie eines Gewässers (12), wie eines Meeres, in elektrische Energie, aufweisend:
- eine im Wesentlichen stationäre Komponente (14), aufweisend Mittel (20) zur Stabilisierung bezüglich des Bodens des Gewässers,
- eine Komponente (16), die bezüglich der stationären Komponente (14) mobil ist, aufweisend mindestens ein schwimmendes Element (40), das dazu vorgesehen ist, auf der Oberfläche (12) des Gewässers zu bleiben, in der Art, dass der Seegang diese mobile Komponente (16) in Bewegung versetzt,
- Führungsmittel (17, 18), die im Wesentlichen vertikal zu der Bewegung der mobilen Komponente (16) bezüglich der stationären Komponente (14) sind, aufweisend mindestens einen im Wesentlichen vertikalen Mast (17), der von der stationären Komponente (14) getragen wird, und mindestens ein komplementäres Führungselement (18), das von der mobilen Komponente (16) getragen wird, das mit dem Mast (17) ein im Wesentlichen vertikale Gleitverbindung bildet,
- Mittel (32) zum Erzeugen von elektrischer Energie, angeordnet zwischen der stationären Komponente (14) und der mobilen Komponente (16), vorgesehen zum Umwandeln der mechanischen Energie, die von der vertikalen Bewegung der mobilen Komponente (16) bezüglich der stationären Komponente (14) hervorgebracht wird, in elektrische Energie,
wobei die Mittel zu Stabilisierung (20) einen Dämpfungssockel (24) aufweist, der an einem unteren Ende (17B) des Masts (17) angeordnet ist, und eine Ballastmasse (28) aufweist, die an dem Mast (17) befestigt ist, dadurch charakterisiert, dass der Dämpfungssockel (24) eine äußere Schürze (26) aufweist, die dazu vorgesehen ist, die Wassermenge, die von dem Sockel mitgeführt wird, einzuschließen.

2. Vorrichtung (10) zur Umwandlung von Energie gemäß Anspruch 1, in dem die Mittel zum Erzeugen von Energie (32) aufweisen:
- einen Generator von elektrischer Energie, aufweisend einen Stator (34), der von der stationären Komponente (14) getragen wird, und einen Rotor (36), der eine Zahnrad (38) trägt,
- mindestens eine Zahnstange (42), die von der mobilen Komponente (16) im Wesentlichen vertikal getragen wird, dazu vorgesehen, mit dem Zahnrad (38) zusammenzuwirken, um den Rotor (36) in Rotation zu versetzen, wenn die mobile Komponente (16) sich vertikal bezüglich der festen Komponente (14) bewegt.

3. Vorrichtung (10) zur Umwandlung von Energie gemäß Anspruch 2, in der das Zahnrad (38) mit dem Rotor (36) durch einen Freilauf-Mechanismus (39), der ein Schwungrad trägt, verbunden ist.

4. Vorrichtung (10) zur Umwandlung von Energie gemäß Anspruch 2, aufweisend ein System zum Antreiben (80) des Rotors (36) mittels des Zahnrads (38), aufweisend:
- mindestens eine Eingangswelle (82), die mit dem Zahnrad (38) verbunden ist,
- eine Ausgangswelle (86), die mit dem Rotor (36) verbunden ist,
- erste Getriebemittel (90), aufweisend ein erstes Zahnrad (94), fest verbunden mit der Ausgangswelle (86) und ein erstes Zahn-Schwungrad (96), das auf der Eingangswelle (82) angeordnet ist, und ein Zwischen-Zahnrad (98), das in das erste Zahn-Schwungrad (96) und das erste Zahnrad (94) eingreift, wobei das erste Zahn-Schwungrad (96) dazu eingerichtet ist, das Zwischen-Zahnrad (98) in Rotation zu versetzen, wenn die Eingangswelle (82) in einer ersten Drehrichtung angetrieben wird, und freizulaufen, wenn die Eingangswelle (82) in einer zweiten Drehrichtung, entgegengesetzt zur ersten angetrieben wird und
- zweite Getriebemittel (92), aufweisend ein zweites Zahnrad (100), fest verbunden mit der Ausgangswelle (86) und ein zweites Schwung-Zahnrad (102), angeordnet auf der Eingangswelle (82) und in Eingriff mit dem zweiten Zahnrad (100), wobei das zweite Schwung-Zahnrad (102) dazu eingerichtet ist, das zweite Zahnrad (100) anzutreiben, wenn die Eingangswelle (82) in der zweiten Drehrichtung angetrieben wird und freizulaufen, wenn die Eingangswelle (82) in der ersten Drehrichtung angetrieben wird.

5. Vorrichtung (10) zur Umwandlung von Energie gemäß einem der Ansprüche 2 bis 4, in dem die mobile Komponente (16) ein Hohlrohrelement (41) aufweist, in dessen Innerem der Mast steckt (17), wobei das Hohlrohrelement (41) von einer Innenwandung beschränkt ist, die die Zahnstange (42) trägt.

6. Vorrichtung (10) zur Umwandlung von Energie gemäß einem der vorhergehenden Ansprüche, bei der der Mast (17) hohl ist und einen Durchgang (52) für ein elektrisches Ausgangskabel (56) des Generators von elektrischer Energie aufweist.

7. Vorrichtung (10) zur Umwandlung von Energie gemäß einem der vorhergehenden Ansprüche, bei der die Mittel zur Stabilisierung (20) Mittel (21) zum Ankern am Boden des Gewässers aufweisen.

8. Vorrichtung (10) zur Umwandlung von Energie gemäß Anspruch 7, bei der die Mittel zum Ankern (21) mindestens eine Ankerleine (22) aufweisen, die an einem oberen Ende (17A) des Masts (17) befestigt ist und sich entlang des Masts (17) bis zum unteren Ende (17B) des Masts (17) erstreckt.

9. Vorrichtung (10) zur Umwandlung von Energie gemäß einem der vorhergehenden Ansprüche, bei der die stationäre Komponente (14) und die mobile Komponente (16) komplementäre Endanschläge (48, 50, 52) aufweisen, die die vertikale Bewegung bezüglich dieser stationären Komponente (14) und dieser mobilen Komponente (16) zwischen einer ausgefahrenen und eingefahrenen Position begrenzt.

10. Vorrichtung (10) zur Umwandlung von Energie gemäß den Ansprüchen 2 und 9 in Kombination, aufweisend motorisierte Mittel, die dazu vorgesehen sind, das Zahnrad (38) auf eine Art in Gang zu setzen, dass die mobile Komponente (16) in Richtung der ausgefahrenen Position oder der eingefahrenen Position bewegt wird, wobei die motorisierten Mittel vorzugsweise durch die Mittel zum Erzeugen von Energie (32), arbeitend als Motor, gebildet sind.

11. Vorrichtung (10) zur Umwandlung von Energie gemäß einem der vorhergehenden Ansprüche, in dem die Schwimmfähigkeit des schwimmenden Elements (40) ungefähr gleich dem doppelten seines Gewichts ist, wobei das schwimmende Element (40) vorzugsweise eine im Allgemeinen flache und kreisförmige oder polygonale Form hat.

12. Vorrichtung (10) zur Umwandlung von Energie gemäß einem der vorhergehenden Ansprüche, bei dem mindestens eine Strebe (43) das schwimmende Element (40) mit dem Führungselement (18) verbindet, wobei diese Strebe (43) eine Stange (60) aufweist, die mit dem Führungselement (18) mit Hilfe einer Drehverbindung (62) verbunden ist und in einer Führungsbuchse (64) gleitet, wobei diese Führungsbuchse (64) mit dem Ende des schwimmenden Elements (40) mit Hilfe einer Drehverbindung (66) verbunden ist, in der Art, dass die Länge der Strebe (43) eingestellt werden kann.

13. Vorrichtung (10) zur Umwandlung von Energie gemäß einem der vorhergehenden Ansprüche, in dem das schwimmende Element (40) eine äußere Schürze (70) aufweist, die sich im Wesentlichen vertikal ausgehend von diesem schwimmenden Element (40) erstreckt und eine Kammer (72) mit diesem schwimmenden Element (40) und dem Mast (17) begrenzt, wobei diese Kammer oben offen ist.

14. Vorrichtung (10) zur Umwandlung von Energie gemäß Anspruch 13, in dem die äußere Schürze (70) Öffnungen (74) aufweist, die jede mit einem Rückschlagventil (76) ausgestattet ist, die das Fließen von Wasser aus der Kammer (72) nach außen ermöglicht und das Fließen von Wasser von außen in die Kammer (72) über diese Öffnungen (74) verhindert.

## Claims

1. A device (10) for converting the mechanical energy from the swell of an expanse of water (12), such as a sea, into electric power, comprising:
- a substantially stationary member (14), comprising a stabilization means (20) relative to the bottom of the expanse of water,
- a member (16) movable relative to the stationary member (14), comprising at least one floating element (40) intended for remaining on the surface (12) of the expanse of water, such that the swell drives the movement of said movable member (16),
- a guiding means (17, 18) substantially vertical to the movement of the movable member (16) relative to the stationary member (14), comprising at least one substantially vertical mast (17), supported by the stationary member (14), and at least one complementary guiding element (18), supported by the movable member (16), forming a substantially vertical sliding connection with the mast (17),
- a generation means (32) for electric power, arranged between the stationary member (14) and the movable member (16), intended for converting into electric power the mechanical energy from the vertical motion of the movable member (16) relative to the stable member (14),
the stabilization means (20) comprising a damping base (24) arranged at a lower end (17B) of the mast (17), and a ballast mass (28) secured to the mast (17),
**characterized in that** said damping base (24) comprises a peripheral skirt (26) intended to contain the water mass driven by the base.

2. The power conversion device (10) according to claim 1, wherein the power generation means (32) comprise:
- an electric power generator, including a stator (34) supported by the stationary member (14), and a rotor (36) supporting a pinion (38),
- at least one rack (42), supported by the movable member (16) substantially vertically, intended to cooperate with the pinion (38) to rotate the rotor (36) when the movable member (16) moves vertically relative to the stationary member (14).

3. The power conversion device (10) according to claim 2, wherein the pinion (38) is connected to the rotor (36) by a free wheel mechanism (39) supporting a flywheel (39A).

4. The power conversion device (10) according to claim 2, comprising a system (80) for driving the rotor (36) by means of the pinion (38), comprising:
- at least one input shaft (82) connected to the pinion (38),
- an output shaft (86), connected to the rotor (36),
- first meshing means (90), comprising a first toothed wheel (94) integral with the output shaft (86), and a first toothed free wheel (96) arranged on the input shaft (82), and an intermediate pinion (98) meshing with the first toothed free wheel (96) and the first toothed wheel (94), the first toothed free wheel (96) being adapted to rotate the intermediate pinion (98) when the input shaft (82) is rotated in a first direction of rotation, and to turn freely when the input shaft (82) is rotated in a second direction of rotation opposite the first, and
- second meshing means (92), comprising a second toothed wheel friend (100), integral with the output shaft (86), and a second toothed free wheel (102), arranged on the input shaft (82), and meshing with the second toothed wheel (100), the second toothed free wheel (102) being adapted to rotate the second toothed wheel friend (100) when the input shaft (82) is rotated in the second direction of rotation, and to turn freely when the input shaft (82) is rotated in the first direction of rotation.

5. The power conversion device (10) according to any one of claims 2 to 4, wherein the movable member (16) comprises a hollow tubular element (41), inside which the mast (17) is housed, the hollow tubular element (41) being delimited by an inner wall supporting the rack (42).

6. The power conversion device (10) according to any one of the preceding claims, wherein the mast (17) is hollow, and comprises a passage (54) for an electric output cable (56) of the electric power generator.

7. The power conversion device (10) according to any one of the preceding claims, wherein the stabilization means (20) comprises an anchoring means (21) at the bottom of the expanse of water.

8. The power conversion device (10) according to claim 7, wherein the anchoring means (21) comprises at least one anchoring line (22) secured to an upper end (17A) of the mast (17), and extending along the mast (17) as far as a lower end (17B) of the mast (17).

9. The power conversion device (10) according to any one of the preceding claims, wherein the stationary (14) and movable (16) members include complementary end-of-travel stops (48, 50, 52) limiting the relative vertical movement of said stationary (14) and movable (16) members between deployed and retracted positions.

10. The power conversion device (10) according to claims 2 and 9 combined, comprising a motor-driven means intended to actuate the pinion (38) so as to move the movable member (16) toward the deployed position or the retracted position, the motor-driven means preferably being made up of the power generating means (32) operating as a motor.

11. The power conversion device (10) according to any one of the preceding claims, wherein the buoyancy of the floating element (40) is approximately equal to twice its weight, the floating element (40) preferably having a general flat and circular or polygonal shape.

12. The power conversion device (10) according to any one of claims 6 to 13, wherein at least one crosspiece (43) connects the floating element (40) to the guiding element (18), said crosspiece (43) comprising a rod (60), connected to the guiding element (18) using a pivot link (62), and sliding in a guide bush (64), said guide bush (64) being connected to the periphery of the floating element (40) using a pivot link (66), so that the length of the crosspiece (43) is adjustable.

13. The power conversion device (10) according to any one of claims 6 to 14, wherein the floating element (40) comprises a peripheral partition (70), extending substantially vertically from said floating element (40), and delimiting an enclosure (72) with said floating element (40) and the mast (17), said enclosure (72) being open on top.

14. The power conversion device (10) according to claim 13, wherein the peripheral partition (70) comprises openings (74) each provided with a check valve (76), allowing the passage of water from the enclosure (72) to the outside, and prohibiting the passage of water from the outside into the enclosure (72) through said openings (74).
